# DEMANDE DE BREVET EUROPEEN

(11) **EP 4 190 997 A1**
(43) Date de publication de la demande: **07.06.2023**
(21) Numéro de dépôt: 22210955.5
(22) Date de dépôt: 01.12.2022
(51) Int. Cl.: E04H 15/18, E04H 15/54, E04H 15/64, B32B 7/00

(54) **TOITURE POUR STRUCTURE MODULAIRE DEMONTABLE DE TYPE CHAPITEAUX OU TENTES**

(30) Priorité: 03.12.2021 FR 2112924
(71) Demandeur: Locabri, 69530 Brignais (FR)
(72) Inventeur: BAROUDI, Halim, 42152 L'HORME (FR)
(74) Mandataire: Cabinet Laurent & Charras

(57) **Abrégé**

Toiture (1) pour structure modulaire (2) démontable formée d'une armature métallique comprenant des traverses (3), des pannes (4), une toile supérieure (6), une toile inférieure (7), et une couche isolante (8), les toiles supérieure (6) et inférieure (7) étant monocouche. Procédé de montage de la toiture.

## Description

### DOMAINE TECHNIQUE

La présente invention se rapporte au domaine technique des structures modulaires démontables, notamment de type chapiteaux, tentes, et structures utilisées généralement pour constituer des abris.

### ART ANTERIEUR

Les structures modulaires démontables, de type chapiteaux, tentes et structures, comprennent de manière générale une armature métallique constituée de poteaux verticaux solidarisés entre eux par des traverses pour former un portique. Pour réaliser lesdites structures, on utilise généralement deux portiques tels que précité, que l'on solidarise entre eux par l'intermédiaire de pannes. Ces pannes sont donc reliées de manière solide et amovible aux portiques pour ainsi former une structure modulaire stable. Cette structure modulaire est de préférence recouverte par une toile, ou des panneaux métalliques pour former un abri.

Il est connu de l'état de la technique des structures modulaires démontables utilisées à des fins industrielles, comme par exemple des entrepôts, des tentes, ou encore des chapiteaux destinés à la vente ou autres activités extérieures. Ainsi, pour répondre au confort thermique des utilisateurs, de telles structures modulaires comprennent des moyens de modification de la température intérieure, tel que des climatiseurs réversibles. Cependant, les climatiseurs, eu égard à la taille des structures sont très énergivores rendant leur utilisation onéreuse.

La toiture est généralement composée d'une seule couche.

Néanmoins, lorsqu'on souhaite obtenir un minimum d'isolation, la toiture peut être composée de deux couches. Il existe aujourd'hui plusieurs principes de mise en œuvre de ces couches :
- Une toile placée dans la gorge supérieure du profil et une toile placée dans la gorge inférieure ;
- Deux toiles soudées entre elles et placées dans la gorge supérieure du profil reliées à un suppresseur permettant de maintenir entre les deux toiles une pression d'air suffisante pour qu'elles s'écartent ;
- Deux toiles placées dans la gorge supérieure qui sont séparées par des boudins gonflables.

De plus, pour obtenir un effet d'isolation supplémentaire, les murs peuvent être réalisés à l'aide de panneaux sandwichs comprenant de l'isolant thermique.

De telles structures doivent pouvoir être assemblées et démontées rapidement, tout en assurant une qualité d'assemblage satisfaisante pour garantir la sécurité et le confort des biens ou des personnes qu'elles sont susceptibles d'abriter.

En outre, ces structures modulaires doivent présenter un bon comportement au feu, lequel est régulé par des normes françaises et européennes concernant le comportement au feu des membranes textiles et le désenfumage des bâtiments, tout en assurant une isolation thermique optimale.

Plus précisément, la norme exige que, sous l'effet du feu, la membrane textile soit percée. Si tel n'est pas le cas, il est indispensable d'installer une trappe incendie.

En outre, la norme impose que le feu ne puisse se propager sur la surface de la toile.

Pour augmenter la résistance au feu des structures et obtenir un effet d'isolation, le document EP3269901 divulgue une structure modulaire démontable dont la toiture comprend une toile supérieure monocouche et une toile inférieure multicouches. Plus précisément, la toile inférieure contient une couche isolante prise en sandwich entre 2 couches textiles incluant des fibres de verre permettant d'améliorer la performance énergétique de la structure et d'éviter la propagation du feu. Cependant, l'usage de la fibre de verre est incompatible avec les objectifs de percement de la toiture favorisant un désenfumage naturel, ce qui implique, dans certains cas, la mise en œuvre d'un système spécifique de désenfumage. En d'autres termes, la fibre de verre ne pouvant être percée par la flamme, il est nécessaire de mettre en place des trappes de désenfumage. Cet équipement supplémentaire associé à la complexité de fabrication liée à la structure complexe de la toile inférieure rendent son coût élevé. En outre, la couche inférieure sous la forme d'un sandwich intégrant de la laine de verre est particulièrement volumineuse et lourde à transporter, ce qui rend la manutention particulièrement complexe.

En outre, la structure de la toile inférieure alourdit le poids de celle-ci, rendant par conséquent sa mise en place par l'installateur difficile et nécessite une ossature plus résistante pour la supporter.

Par ailleurs, le mode de conception de cette toile rend son transport malaisé et onéreux dû à un volume important.

### EXPOSE DE L'INVENTION

Le but de l'invention est donc de remédier aux inconvénients ci-dessus.

Plus précisément, l'un des buts de l'invention est de proposer une toiture pour structure modulaire démontable de type chapiteaux ou tentes améliorant les performances énergétiques de ladite structure, notamment par une isolation thermique plus efficace, tout en conservant ses caractéristiques de désenfumage naturel en cas d'incendie.

En d'autres termes, le problème que se propose de résoudre l'invention est celui de mettre au point des structures modulaires mettant en œuvre des membranes textiles, qui remplisse le triple objectif d'isolation, de percement de la toiture en cas d'incendie et de non-propagation du feu, le tout sans nécessiter la présence de trappes de désenfumage.

Un autre objectif de l'invention est de fournir une toiture qui puisse être transportée et installée aisément sans manutention excessive et par conséquent qui ne soit pas coûteuse, permettant un assemblage et un démontage plus rapide.

Encore un autre objectif de l'invention est de fournir une toiture dont la capacité d'isolation soit maintenue sur toute sa période d'utilisation en interdisant tout phénomène de glissement de la couche isolante, le tout en ayant un comportement au feu répondant aux normes en vigueur.

À cet effet, il a été mis au point une toiture pour structure modulaire démontable de type chapiteaux ou tentes notamment, formée d'une armature métallique comprenant des traverses reliées par des pannes, lesdites traverses comprenant des moyens de solidarisation aptes à coopérer avec des moyens de solidarisation complémentaires des bords d'une toile supérieure et ceux d'une toile inférieure, les toiles supérieure et inférieure étant indépendantes l'une de l'autre.

Selon l'invention, la toiture comprend en outre au moins une couche isolante thermique positionnée entre la toile supérieure et la toile inférieure.

Plus précisément, la toiture comprend :
- une armature métallique comprenant des traverses reliées par des pannes,
- 2 toiles indépendantes l'une de l'autre, respectivement une toile supérieure et une toile inférieure,
- une couche isolante.

Les traverses comprennent des moyens de solidarisation aptes à coopérer avec des moyens de solidarisation complémentaires que présentent les bords de la toile supérieure et ceux de la toile inférieure.

Selon l'invention, les toiles supérieure et inférieure sont monocouche.

Par l'expression « toile supérieure », on désigne le fait que la toiture comprenne une toile orientée vers l'extérieur de la structure modulaire.

En pratique, la toile supérieure présente une face ou surface inférieure en regard de la toile inférieure.

Par l'expression « toile inférieure », on désigne le fait que la toiture comprenne une toile orientée vers l'intérieur de la structure modulaire.

En pratique, la toile inférieure présente une face ou une surface supérieure en regard de la toile supérieure.

Ainsi, les notions de toile supérieure et inférieure se comprennent par le fait que la toile la plus proche du sol est la toile inférieure et celle la plus éloignée du sol est la toile supérieure.

Selon l'invention, les toiles supérieure et inférieure sont monocouche, en ce sens qu'il ne s'agit pas d'un sandwich ou d'un assemblage de plusieurs toiles. Elles peuvent être composées d'un seul matériau ou se présenter sous la forme d'un matériau composite.

Du fait de l'absence de sandwich, la toile inférieure est beaucoup plus facile à manipuler et présente par ailleurs l'avantage d'éviter les phénomènes de condensation au sein de la couche isolante.

Selon l'invention, la couche isolante est de préférence séparée respectivement de la toile supérieure ou de la toile inférieure par une lame d'air.

En pratique, rien ne sépare la couche isolante de la toile inférieure ou supérieure autre que la lame d'air.

De cette manière, la toiture de la structure modulaire démontable permet de disposer d'une isolation thermique renforcée, améliorant ainsi la performance énergétique de la structure. L'ajout d'une couche isolante thermique entre la toile supérieure et la toile inférieure optimise l'isolation thermique. En effet, la couche isolante ainsi que la lame d'air entre les toiles supérieure et inférieure permettent une meilleure isolation thermique, tout en réduisant les phénomènes de condensation, propres à ces structures.

De plus, cette construction spécifique permet d'assurer le percement de la toile tout en évitant tout risque de propagation du feu et par conséquent, permet de s'affranchir de la mise en place de trappes de désenfumage.

Selon une première forme de réalisation, la couche isolante thermique est déposée sur la toile inférieure et séparée de la toile supérieure par une lame d'air.

Dans ce cas, la couche isolante est en contact avec toute la surface de la face supérieure de la toile inférieure.

Ainsi, une telle disposition de la couche isolante permet d'améliorer l'isolation thermique de la structure modulaire. La lame d'air est formée par l'espace entre la couche isolante et la toile supérieure constituant une couche supplémentaire d'isolation thermique tout en réduisant le phénomène de condensation.

En pratique, , la toile inférieure présente des moyens de fixation ignifugés à la couche isolante.

Dans une mode de réalisation particulier, les moyens de fixation sont du type mâle et/ou femelle.

De préférence, pour ce mode de réalisation et pour les modes de réalisation qui suivent, la couche isolante se présente sous la forme d'une ouate isolante, avantageusement à base de fibres non tissés de polyester, en particulier de PET, constituées de préférence de 100% de fibres non tissés de PET, bénéficiant d'un classement anti-feu B s1 d0 ou B s2 d0 ou M2.

Dans ce cas, les moyens de fixation sont du type mâle uniquement, la ouate faisant office de femelle. En effet, la surface de la ouate est suffisamment ébouriffée pour permettre l'accrochage efficace de ce type de moyens de fixation sans adjonction d'un moyen de fixation supplémentaire coté ouate.

De cette manière, la couche isolante est fixée à la toile inférieure, permettant ainsi, d'éviter le phénomène de glissement de la couche isolante sur la toile inférieure, et ce, quelle que soit l'inclinaison de la structure.

Lorsque la longueur de la couche isolante est suffisante et selon un second mode de réalisation, la couche isolante thermique est continue et positionnée sur la totalité de la surface inférieure de la toile supérieure et la couche isolante est séparée de la toile inférieure par une lame d'air.

Selon un troisième mode de réalisation, la couche isolante est discontinue et positionnée au contact d'au moins une partie de la face inférieure de la toile supérieure et la couche isolante est séparée de la toile inférieure par une lame d'air.

Le contact partiel avec la surface supérieure correspond au cas de figure dans lequel la longueur de la couche isolante n'est pas suffisante pour couvrir la totalité de la surface de la toiture et nécessite la mise en œuvre d'un rouleau additionnel de couche isolante. Dans ce cas, la toiture combine des zones dans lesquelles la couche isolante est en contact avec toute la surface inférieure de la toile supérieure et est positionnée entre les pannes et la toile supérieure et des zones dans lesquelles le contact n'est que partiel.

Dans ce cas, on vient fixer l'extrémité libre de la couche sur la partie inférieure de la panne la plus proche, en particulier par cloutage. L'extrémité libre de la couche additionnelle est fixée quant à elle sur la partie supérieure de cette même panne, de sorte à passer par-dessus celle-ci, entre ladite panne et la toile supérieure en direction de la panne suivante.

En d'autres termes, la couche isolante est discontinue et comprend au moins deux laizes, l'extrémité libre de la première laize étant fixée sur la partie inférieure d'une panne et l'extrémité libre de la laize suivante étant fixée sur la partie supérieure de la même panne, de sorte à passer par-dessus celle-ci, entre ladite panne et la toile supérieure en direction de la panne suivante. Une même laize entre ses 2 extrémités libres est positionnée le cas échéant, c'est-à-dire lorsque la longueur est suffisante, entre une panne et la toile supérieure.

Selon une forme de réalisation particulière, la couche isolante a une épaisseur comprise entre 10 et 300 millimètres, de préférence, entre 50 à 100 millimètres, avantageusement de 75 mm.

Ainsi, une telle épaisseur permet une isolation thermique performante tout en limitant le poids de la couche isolante. En effet, une couche isolante trop épaisse engendrerait un poids plus important qui accentuerait le risque de glissement ou de formation d'un ventre de la couche isolante respectivement sur la toile inférieure ou depuis la toile supérieure. Pour éviter un tel phénomène, l'installateur devra avoir recours à des moyens de fixation entre la toile inférieure ou supérieure et la couche isolante plus complexes, rendant l'installation de la toiture plus difficile et par conséquent plus onéreuse.

De préférence, les toiles supérieure et inférieure et la couche isolante répondent à la norme de référence M2 ou les euroclasses B s2 d0 ou B s1 d0 pour ce type de structure. Cette norme prévoit que les matériaux utilisés doivent avoir un comportement face au feu qualifiable de « difficilement inflammable ». En pratique, on utilise une toile composée d'une trame polyester enduite de PVC ayant subi un traitement ignifugeant M2.

Dans un mode de réalisation particulier, les toiles supérieure et inférieure sont classées M2 selon la norme française et la couche isolante est classée Bs1d0 selon les euroclasses.

Dans un mode de réalisation particulier, la couche isolante se présente sous la forme de plusieurs laizes de ouates agencées et fixées côte à côte, notamment lorsque la couche isolante est déposée sur la toile inférieure.

En pratique, les traverses ont une hauteur comprise entre 210 et 400 mm, laissant une lame d'air d'épaisseur avantageusement comprise entre 135 et 325 mm. Ce ratio permet d'assurer une bonne isolation, un percement de la toile en cas d'incendie, sans risque de propagation du feu.

L'invention concerne aussi un procédé de montage d'une toiture dont les étapes varient en fonction du positionnement de la couche isolante.

Lorsque la couche isolante est positionnée sur la toile inférieure, le procédé comprend les étapes suivantes :
- Assemblage des traverses et pannes ;
- Montage de la toile supérieure sur les traverses ;
- Mise en place de moyens de fixation sur la toile inférieure non montée ;
- Assemblage et solidarisation de la couche isolante aux moyens de fixation de la toile inférieure ;
- Montage de la toile inférieure sur les traverses.

Dans un mode de réalisation préféré, l'étape d'assemblage et de solidarisation de la couche isolante sur la toile inférieure consiste à dérouler côte à côte au moins un rouleau de couche isolante sur la toile inférieure, cette dernière étant préalablement déroulée au sol.

Dans une autre forme de réalisation, les rouleaux de couche isolante, une fois déroulés, côte à côte, sont fixés les uns aux autres, par des moyens de fixation. Lesdits moyens de fixation sont de préférence un système de fixation du type bande autoagrippante ignifugée mâle/, le coté femelle étant assuré par la ouate.

Lorsque la couche isolante est positionnée sous la toile supérieure, le procédé comprend les étapes suivantes :
- Assemblage des traverses et pannes ;
- Montage de la toile supérieure sur les traverses ;
- Montage de la couche isolante soit entre les pannes et la toile supérieure lorsque la couche isolante est continue, soit, lorsque la couche isolante comprend plusieurs laizes, par fixation de l'extrémité terminale de la première laize sur la partie inférieure d'une panne et de l'extrémité de la laize suivante sur la partie supérieure de cette même panne de sorte à ce que ladite couche soit ensuite positionnée entre la panne et la toile en direction de la panne suivante,
- Montage de la toile inférieure sur les traverses.

Ainsi, un tel procédé d'installation d'une toiture de structure modulaire est rendu plus aisé et par conséquent plus rapide.

### BREVE DESCRIPTION DES DESSINS

D'autres avantages et caractéristiques ressortiront mieux de la description qui va suivre, donnée à titre d'exemple non limitatif, de la structure selon l'invention, à partir des dessins annexés dans lesquels :
[Fig. 1] est une représentation schématique de la structure modulaire démontable représentée sans les toiles, ni la couche isolante.
[Fig. 2] est une vue en coupe de la toiture d'une structure modulaire démontable selon l'invention selon un premier mode de réalisation selon lequel la couche isolante est positionnée sur la toile inférieure.
[Fig.3] une vue en coupe de la toiture d'une structure modulaire démontable selon l'invention selon un second mode de réalisation selon lequel la couche isolante est continue et positionnée sous la toile supérieure.
[Fig.4] une vue en coupe de la toiture d'une structure modulaire démontable selon l'invention selon un troisième mode de réalisation selon lequel la couche isolante est discontinue et positionnée sous la toile supérieure.

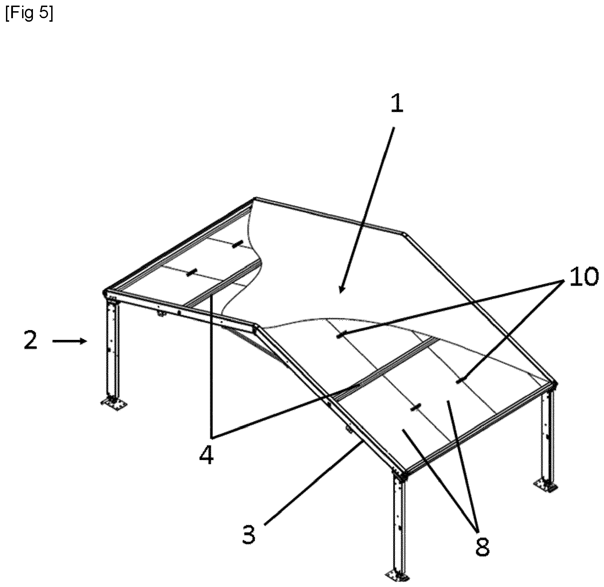

[Fig.5] est une représentation schématique de la toiture d'une structure modulaire démontable avec la toile supérieure et la couche isolante, la toile inférieure étant masquée par l'isolant

### DESCRIPTION DETAILLEE DE L'INVENTION

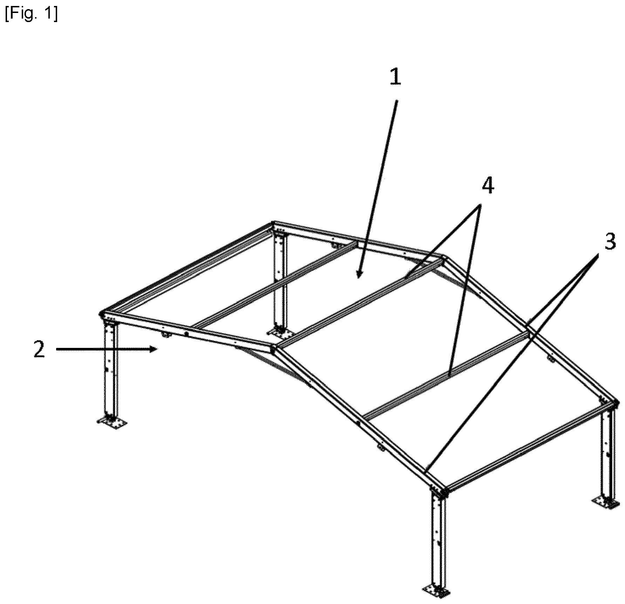

En référence aux figures 1 à 3, la présente invention concerne une toiture (1) pour structure modulaire (2) démontable de type chapiteaux ou tentes. Une telle toiture (1) permet d'améliorer les performances énergétiques de la structure modulaire (2), par une isolation thermique améliorée.

L'invention trouve une application avantageuse dans le domaine des toitures pour structure modulaire (2) démontable avec pour objectif de limiter le temps d'installation et de démontage.

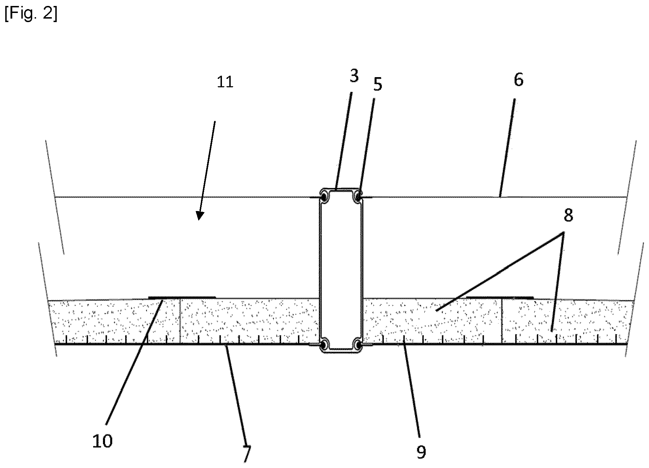

D'une manière générale, la structure de la toile inférieure (7) conformément à la figure 2, permet d'éviter tout phénomène de glissement de la couche isolante (8) grâce à de la bande crochet fixée sur la toile inférieure (7), tout en répondant aux normes de sécurité en vigueur anti-feu.

La structure modulaire (2) démontable est formée d'une armature, généralement métallique comprenant des traverses (3) reliées par des pannes (4)

La structure modulaire (2) peut se présenter sous la forme de hall, de tente industrielle ou encore hall de construction légère. De manière générale, les pannes (4) et traverses (3), composant la structure modulaire (2) sont équipées de toiles PVC afin de créer un abri. Ces structures peuvent être fixées au sol sans nécessiter de fondations spéciales et sont généralement prévues pour des événements ou autres manifestations limitées dans le temps.

Ces structures modulaires (2) peuvent être démontées après la fin de leur utilisation, mais aussi reconfigurées une fois installées en ajoutant ou enlevant certains de leurs éléments constitutifs.

Les traverses (3) démontables comprennent des moyens de solidarisation aptes à coopérer avec des moyens de solidarisation (5) complémentaires des bords d'une toile supérieure (6) et ceux d'une toile inférieure (7) monocouche. Ainsi, l'installation et le démontage sont rendus plus aisés et donc plus rapides. En pratique, il s'agit d'une connexion du type jonc agencé à l'extrémité d'une toile, lequel glisse dans les gorges que présentent les traverses et qui sont prévues à cet effet.

L'ensemble de ces pannes (4), traverses (3) et toiles supérieure (6) et inférieure (7) composent la toiture (1).

Les toiles utilisées sont monocouche et composées d'une trame polyester enduite de PVC ayant subi un traitement ignifugeant M2.

Afin d'améliorer les performances thermiques de la structure, la toiture (1) dans un mode de réalisation selon l'invention, comprend une couche isolante (8) localisée entre la toile supérieure (6) et inférieure (7).

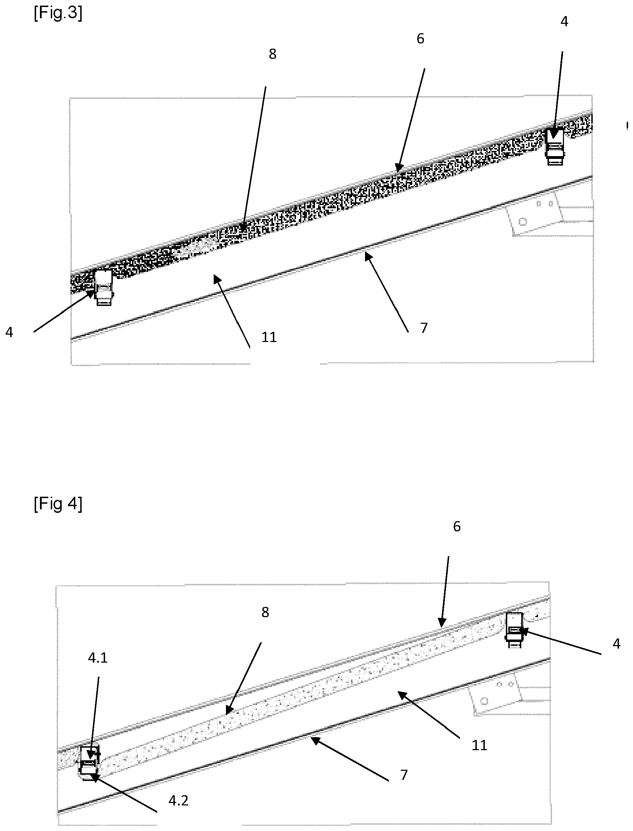

Plus précisément et dans un premier mode de réalisation tel que représenté sur la figure 3, la couche isolante (8) est positionnée sur la toile inférieure (7) de manière à laisser un espace entre la toile supérieure (6) et la couche isolante (8), formant ainsi une lame d'air (11) permettant de limiter le phénomène de condensation.

De plus, la lame d'air (11) ainsi créé va participer, avec la couche isolante (8) à l'amélioration de l'isolation thermique.

De manière préférée, la couche isolante (8) est en contact sur toute sa surface avec la surface de la toile inférieure (7).

La couche isolante (8) se présente sous forme d'une ouate isolante et est constituée à majorité de poly téréphtalate d'éthylène, plus connu sous les abréviations PET, PETP ou PETE ignifugé pour obtenir une résistance au feu B s2 d0. Plus préférentiellement la couche isolante (8) est constituée de panneaux réalisés entièrement en PET, de préférence sous la forme d'un non tissé. Lesdits panneaux de la couche isolante (8) sont reliés entre eux par des moyens de fixation (10), par exemple-une bande autoagrippante ignifugée mâle, le coté femelle étant assuré par la ouate elle-même.

La toile inférieure (7), sur laquelle repose la couche isolante (8), comprend des moyens de fixation (9) afin que cette dernière soit fermement fixée, interdisant le phénomène de glissement de la couche isolante sous l'effet de sa gravité. En pratique, des bandes auto agrippantes mâles sont positionnées perpendiculairement à la pente du toit selon un pas compris entre 1.5 et 3.5 m, avantageusement de 2,5 m environ.

De préférence, les moyens de fixation (9) sont collés sur la toile inférieure (7) avant sa fixation à la traverse (3).

Avantageusement, la couche isolante (8) est une ouate de PET en fibres non tissés. Ainsi, de par son état de surface, la ouate se fixe au moyen de fixation (9) de la toile inférieure (7), sans moyens additionnels limitant le glissement de la couche isolante (8) sur la toile inférieure (7).

Ce système de fixation (9) complémentaire type mâle/femelle permet d'améliorer le maintien de la couche isolante (8) sur la toile inférieure (7) et ainsi de maintenir la fonction d'isolation thermique durant toute la durée d'utilisation de la structure modulaire.

Selon une caractéristique préférentielle de l'invention, la couche isolante (8) présente une épaisseur comprise entre 10 à 300 millimètres, de préférence entre 50 et 100 millimètres, afin d'avoir un ratio convenable entre bonne isolation thermique et légèreté.

Un poids faible de la couche isolante (8) permet d'avoir des moyens de fixation (9) plus simples afin d'effectuer un montage plus rapide et moins couteux.

Afin de respecter les normes de sécurité, notamment les normes de sécurité anti feu, les toiles supérieure (6), inférieure (7) et la couche isolante (8) répondent respectivement à la norme M2 et les euroclasses B s2 d0 ou B s1 d0. Par conséquent, lors d'un départ de feu, les éléments précités (6, 7, 8) se percent et ne créent pas de flamme supplémentaire, ils sont directement consumés. Ainsi, le départ de feu s'estompe de lui-même par manque de combustible et les fumées s'échappent par désenfumage naturel.

Le montage de la structure (2) est réalisé selon un certain nombre d'étapes. En premier lieu, l'installateur assemble les traverses (3) et les pannes (4) grâce à des moyens de solidarisation.

Une fois la structure métallique (2) montée, l'installateur glisse la toile supérieure (6) dans les traverses (3) par le biais de moyens de solidarisations complémentaires (5) du type jonc/ gorge se situant sur les pans de la toile supérieure (6).

Par la suite, l'installateur déroule la toile inférieure au sol. Soit la toile est déjà équipée des moyens de fixation, soit l'installateur colle les moyens de fixation (9), sur la toile inférieure (7) avant son montage en sous-toiture. Le collage réalisé, l'installateur déroule les rouleaux de couche isolante (8) sur la toile inférieure (7) afin de solidariser la couche isolante (8) et la toile inférieure (7).

Dans cet exemple, les panneaux ou les rouleaux de couche isolante (8) sont disposés les uns à côté des autres et reliés entre eux par des moyens de fixation (10), par exemple des bandes autoagrippantes.

Enfin, une fois la solidarisation de la toile inférieure (7) et la couche isolante (8) réalisée, l'installateur glisse la toile inférieure (7) dans les gorges inférieures des traverses (3) par le biais de moyens de solidarisations complémentaires (5) du type jonc/gorge se situant sur les pans de la toile inférieure (7).

Selon un second mode de réalisation, la couche isolante thermique (8) dont les caractéristiques sont identiques à celles concernant le premier mode de réalisation, est positionnée au contact de la toile supérieure (6).

Tel que représenté sur la figure 3, la couche isolante (8) est maintenue au contact de la toile supérieure (6) sur toute sa surface. Tel est notamment le cas lorsque la longueur de la couche isolante (8) disponible sur un rouleau est suffisante pour couvrir la totalité de la surface de la toiture.

Dans ces conditions, la couche isolante est positionnée entre les pannes (4) et la toile supérieure (6) de sorte que sous la tension exercée d'une panne à une autre, la couche (6) est tendue et reste au contact de la toile supérieure (6).

A la différence du premier mode de réalisation, la couche isolante (8) est positionnée entre les pannes et la toile supérieure, puis seulement ensuite, on monte la toile inférieure.

Le mode de réalisation tel que représenté sur la figure 4 est une variante de celui de la figure 3.

Il s'agit du cas où la longueur de la toiture nécessite la mise en œuvre de plusieurs rouleaux de couches isolantes. La couche isolante dans son ensemble combine alors plusieurs laizes. Dans ce cas, il est nécessaire de fixer la couche isolante ou laize au départ et à l'arrivée sur des supports accessibles, en l'espèce les pannes (4). En ce sens, tous les « départs » de couche (8) sont fixés sur la partie (4.1) supérieure des pannes avant la fixation des « arrivées » de couche qui sont fixées sur la partie inférieure (4.2) des pannes. En effet, l'inverse ne peut être possible car les « départs » ne seraient pas accessibles si les « arrivées » sont fixées avant.

Pour optimiser le contact entre la couche isolante (8) et la toile supérieure (6), les départs de couche viennent tourner au-dessus de la panne en direction de la panne suivante, de manière à l'entourer et assurer le maintien de la couche entre la panne et la toile supérieure.

La fixation est assurée notamment par cloutage, les clous étant retirés au moment du démontage.

Entre les « départs » et les « arrivées », la couche isolante (8) est positionnée au contact de la toile supérieure entre les pannes et ladite toile.

Dans les exemples, la distance séparant la toile supérieure de la toile inférieure est comprise entre 210 mm et 400 mm, de sorte que la lame d'air formée, si on considère une épaisseur de couche isolante de l'ordre de 75 mm a une taille maximale comprise entre 135 mm et 325 mm.

Il ressort de ce qui précède que l'invention propose une toiture (1) pour structure modulaire (2) démontable pouvant résoudre les problèmes d'isolation thermique tout en respectant les normes de sécurité en vigueur, en particulier anti feu.

## Revendications

1. Toiture (1) pour structure modulaire (2) démontable de type chapiteaux ou tentes notamment, formée :
- d'une armature métallique comprenant des traverses (3) reliées par des pannes(4),
- de 2 toiles indépendantes l'une de l'autre, respectivement une toile supérieure (6) et une toile inférieure (7)
- et une couche isolante (8),
les dites traverses (3) comprenant des moyens de solidarisation aptes à coopérer avec des moyens de solidarisation (5) complémentaires que présentent les bords de la toile supérieure (6) et ceux de la toile inférieure (7), **caractérisée en ce que** les toiles supérieure (6) et inférieure (7) sont monocouche

2. Toiture (1) selon la revendication 1, **caractérisée en ce que** la couche isolante (8) thermique est continue et positionnée sur la totalité de la surface inférieure de la toile supérieure (7) et **en ce que** la couche isolante est séparée de la toile inférieure par une lame d'air (11).

3. Toiture (1) selon la revendication 1, **caractérisée en ce que** la couche isolante est discontinue et positionnée au contact d'au moins une partie de la face inférieure de la toile supérieure (6) et **en ce que** la couche isolante est séparée de la toile inférieure par une lame d'air (11).

4. Toiture (1) selon la revendication 3, **caractérisée en ce que** la couche isolante comprend au moins deux laizes, l'extrémité libre de la première laize étant fixée sur la partie inférieure d'une panne et l'extrémité libre de la laize suivante étant fixée sur la partie supérieure de la même panne, de sorte à passer par-dessus celle-ci entre ladite panne et la toile supérieure en direction de la panne suivante, une même laize entre ses 2 extrémités libres étant positionnée le cas échéant entre une panne et la toile supérieure.

5. Toiture (1) selon la revendication 1, **caractérisée en ce que** la couche isolante (8) thermique est déposée sur la toile inférieure (7) et séparée de la toile supérieure (6) par une lame d'air (11).

6. Toiture (1) selon l'une des revendications précédentes, **caractérisée en ce que** la couche isolante (8) se présente sous la forme d'une ouate, avantageusement à base de fibres non tissées de PET.

7. Toiture (1) selon la revendication 5, **caractérisée en ce que** la toile inférieure (7) présente des moyens de fixation (9) à la couche isolante, avantageusement du type mâle.

8. Toiture (1) selon l'une des revendications précédentes, **caractérisée en ce que** la couche isolante thermique (8) a une épaisseur comprise entre 10 et 300 millimètres, de préférence entre 50 et 100 millimètres.

9. Toiture (1) selon l'une des revendications précédentes, **caractérisée en ce que** les toiles supérieure (6) et inférieure (7) et la couche isolante thermique (8) répondent à la norme M2 ou les euroclasses B s2 d0 ou B s1 d0.

10. Toiture (1) selon la revendication 4, **caractérisée en ce que** la couche isolante thermique (8) se présente sous la forme de plusieurs laizes de ouates agencées et fixées côte à côte.

11. Toiture (1) selon l'une des revendications précédentes, **caractérisée en ce que** les traverses ont une hauteur comprise entre 210 et 400 mm, laissant une lame d'air d'épaisseur avantageusement comprise entre 135 et 325 mm.

12. Procédé de montage d'une toiture (1) selon la revendication 5, **caractérisé en ce que** le procédé comprend les étapes suivantes :
- Assemblage des traverses (3) et pannes (4) ;
- Montage de la toile supérieure (6) sur les traverses;
- Mise en place de moyens de fixation (9) sur la toile inférieure (7) non montée ;
- Assemblage et solidarisation de la couche isolante (8) aux moyens de fixation (9) sur la toile inférieure (7) ;
- Montage de la toile inférieure (7) sur les traverses.

13. Procédé de montage d'une toiture (1) selon la revendication 12, **caractérisé en ce que** l'assemblage et la solidarisation de la couche isolante (8) sur la toile inférieure (7) consiste à dérouler côte à côte au moins un rouleau de couche isolante (8) sur la toile inférieure (7), cette dernière étant préalablement déroulée au sol.

14. Procédé de montage d'une toiture (1) selon la revendication 12, **caractérisé en ce que** les rouleaux de couche isolante, une fois déroulés sont fixés les uns aux autres, côte à côte.

15. Procédé de montage d'une toiture (1) selon l'une des revendications 2 à 4, **caractérisé en ce qu'**il comprend les étapes suivantes :
- Assemblage des traverses et pannes ;
- Montage de la toile supérieure sur les traverses ;
- Montage de la couche isolante soit entre les pannes et la toile supérieure lorsque la couche isolante est continue, soit, lorsque la couche isolante comprend plusieurs laizes, par fixation de l'extrémité terminale de la première laize sur la partie inférieure d'une panne et de l'extrémité de la laize suivante sur la partie supérieure de cette même panne de sorte à ce que ladite couche soit ensuite positionnée entre la panne et la toile en direction de la panne suivante,
- Montage de la toile inférieure (7) sur les traverses.
